# EUROPEAN PATENT SPECIFICATION

(11) **EP 1 973 066 B1**
(45) Date of publication and mention of the grant of the patent: **30.06.2010**
(21) Application number: 08153182.4
(22) Date of filing: 21.03.2008
(51) Int. Cl.: G06K 15/02, H04N 1/60

(54) **Method for printing onto coloured substrates and computer system using said method**
Verfahren zum Drucken auf farbigen Substraten und dieses Verfahren anwendendes Computersystem
Procédé pour l'impression sur des substrats colorés et système informatique utilisant ledit procédé

(30) Priority: 22.03.2007 US 907149 P
(43) Date of publication of application: 24.09.2008
(73) Proprietor: CADlink Technology Corporation, Ottawa, Ontario K1H 1E1 (CA)
(72) Inventor: Simmonds, Trevor, Ottawa, Ontario K1V 2B2 (CA); Reynen, Gordon, Greely, Ontario K4P 1M7 (CA); Evans, David, Ealing, London, W138ND (GB)
(74) Representative: Intes, Didier Gérard André

(56) References cited:
- US-A1- 2003 053 134
- US-B2- 6 738 071

## Description

The present application claims the benefit of U.S. Provisional Patent Application Serial No. 60/907,149 filed March 22, 2007.

### FIELD OF INVENTION

The invention relates to printing electronic images and, in particular, it relates to reducing the amount of printing ink used by computer-assisted image processing systems to print electronic images.

### BACKGROUND OF THE INVENTION

The use of computers and computer-assisted image processing systems (printers) to print electronic images is known in the prior art. More specifically, computers used for the purpose of printing electronic images are known to utilize basically familiar, expected and obvious processes and techniques, notwithstanding the myriad of methods encompassed by the crowded prior art which have been developed for the fulfillment of countless objectives and requirements.

Although many methods for printing electronic images have been developed heretofore, the need for optimizing the quantities of printing ink used by the computer-assisted image processing systems is a continuing challenge.

Traditionally, people print onto white substrates. To print onto colored substrates, it is often necessary to pre-coat the area to be printed on with a white colorant. This white coat is called an "underbase." Then, in subsequent steps, the desired color image is printed onto the underbase. This is done in order to produce the same or comparable results as would be produced when printing onto white substrates.

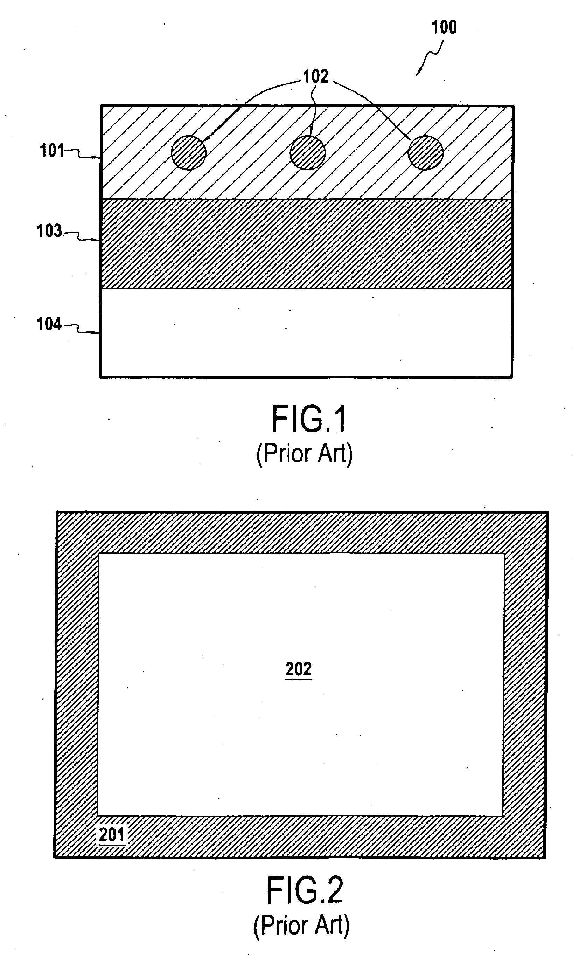

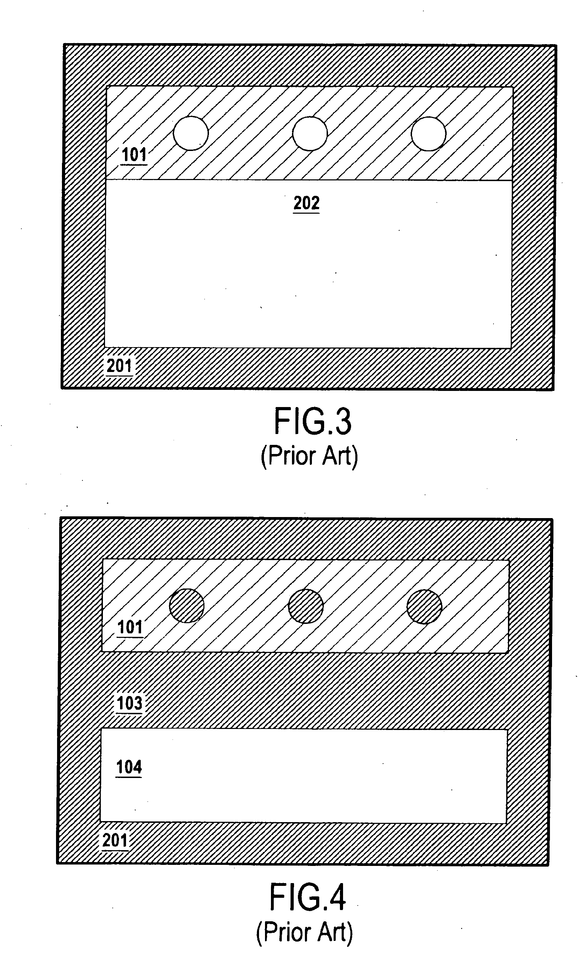

Figures 1 to 4 are used to illustrate one of the methods of the prior art. Figure 1 shows a made-up flag 100 used for the purpose of illustration, wherein the flag 100 consists of a top red strip 101 having three black dots 102 uniformly spaced from one another, a middle black strip 103, and a bottom white strip 104. (The color red is shown in the figures with medium density hatching since the figures only use different densities of hatching. The black color is represented with high-density hatching.)

To print this flag 100 on a black substrate 201 (see Figure 2), the first step would be to have the underbase 202 applied to the area of the substrate 201 where the flag 100 is supposed to be printed. The second step, shown in Figure 3, would be to apply the red-that is, to print the red strip 101 with the three dots "knocked out." The third step, shown in Figure 4, would be to apply the black-that is, to print the black strip 103 and the three black dots 102. The remaining part of the applied underbase (which is basically white paint) would be left uncovered and exposed as the white strip 104. Of course, the order in which the colors are applied can be varied: the black ink can be applied to the black strip area and the three dots areas before the red ink is applied to the red strip area, excluding the dots areas.

Unfortunately, this method has some, but not all, of the desirable techniques required to adequately save printing ink.

This prior art method saves printing ink in the areas of the black dots by knocking out the dots during the application of the red ink, instead of printing a whole red strip and then printing the three black dots on top of the whole red strip. This saves one layer of paint-namely, red paint-in the areas of the three dots. However, this method is still considered wasteful: the red area has two whole layers of paint (a white layer and a red layer), and the black areas-strip and three dots-also have two whole layers of paint (a white layer and a black layer).
Besides, the patent US 6738071 discloses a method for rendering an anti-aliased graphic, which can be used for rendering anti-aliased areas on any background colour.

There exists a need for a new and improved method for providing a more efficient way of printing electronic images on colored substrates. The present invention substantially fulfills this need.

### SUMMARY OF THE INVENTION

To overcome the deficiencies of the prior art described above, and to overcome other limitations that will become apparent upon reading and understanding the present specification, the present invention accordingly provides a method for printing an electronic image according to claim 1 and a system according to claim 10.

The present invention provides the advantage of reducing the quantities of printing ink used by computer-assisted image processing systems while printing electronic images on colored substrates, along with other advantages that will suggest themselves to those skilled in the art.

### BRIEF DESCRIPTION OF THE DRAWINGS

The invention will be best understood by reference to the following detailed description taken in conjunction with the accompanying drawings, in which:
Figure 1 shows a made-up flag used for the purpose of illustrating the method of the prior art;
Figures 2 to 4 respectively illustrate the three steps involved with the prior art method to print the flag of Figure 1;

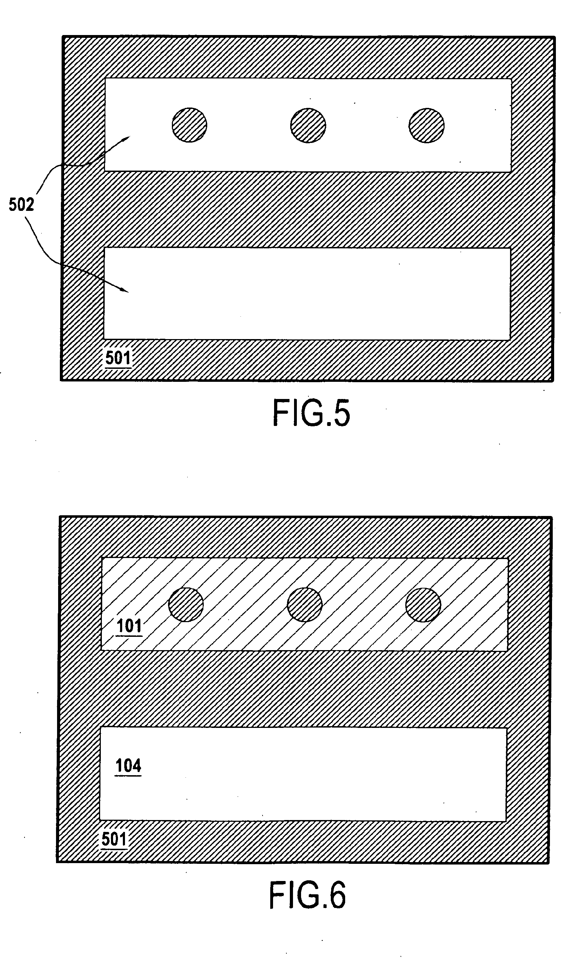

Figures 5 and 6 illustrate the steps involved with one aspect of the present invention to print the flag of Figure 1;

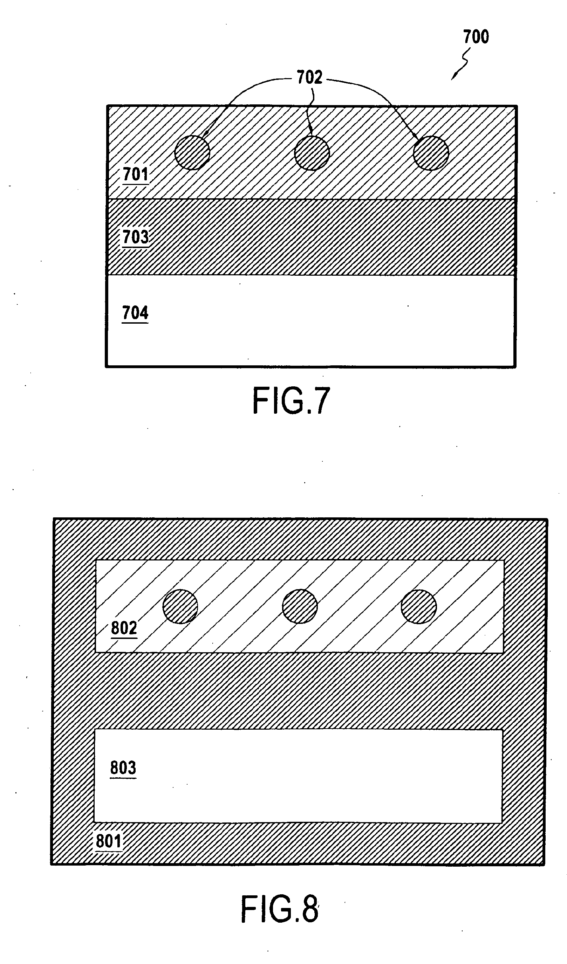

Figure 7 shows a made-up flag used for the purpose of illustrating another aspect of the present invention; and

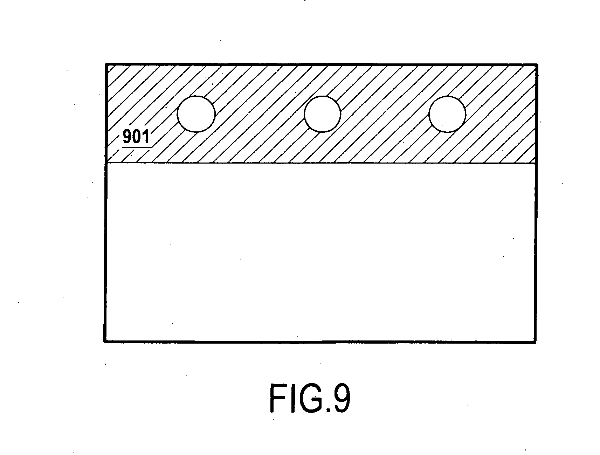

Figures 8 and 9 illustrate the steps involved with the other aspect of the present invention to print the flag of Figure 7.

### DETAILED DESCRIPTION OF THE PREFERRED EMBODIMENT

The following description and accompanying drawings are presented to enable any person skilled in the art to make use of the invention and is provided in the context of a particular application and its requirements. Various modifications to the disclosed methods will be readily apparent to those skilled in the art, and the general principles defined herein may be applied to other applications without departing from the spirit and scope of the present invention. Thus, the present invention is not intended to be limited to the methods discussed and illustrated, but is to be accorded the widest scope consistent with the principles disclosed herein. The appended claims, properly construed, form the only limitation upon the scope of the invention.

It will be generally understood that the terms "ink" and "paint" as used hereinafter are interchangeable. Also, it will be generally understood that the term "non-white substrate" includes "colored substrates," "translucent substrates" and "transparent substrates."

Though this invention is described with the environment of black substrates in mind, the methods described and illustrated herein are applicable to any non-white substrates and are not limited to an implementation using black substrates.

Furthermore, these methods could even be applied while using white substrates. For example, they could be used for printing images comprising white areas on a white substrate, which may involve the application of a black underbase below the white areas of the image.

Figures 5 and 6 along with the accompanying discussion will illustrate how the same made-up flag 100, used for the illustration of the prior art method, could be printed on a black substrate while using an amount of ink less than that required by the prior art above. The same flag is used to facilitate the comparison between the two amounts of ink used by the method of the prior art and the method of the present invention. Also, the flag and its strips and dots have been given the same reference numerals as in the prior art. (Again, the color red is shown in the figures with medium-density hatching since the figures only use different densities of hatching.)

In accordance with the present invention, to print the flag 100 on a black substrate 501 (see Figure 5), the first step would be to have the underbase 502 applied only to the areas of the substrate 501 where the non-black areas of the flag 100 are supposed to be printed. The second step, shown in Figure 6, would be to apply the red-that is, to print the red strip 101 with the three dots knocked out. The remaining part of the applied underbase would be left uncovered and exposed as the white strip 104.

As can be readily seen, this method uses much less ink than the method of the prior art discussed above. The black strip area and the black dots area in the final image of the prior art had two whole layers of paint (a white layer and a black layer), wherein no paint is used for these areas when using the method of the present invention. Therefore, the amount of ink saved is equal to the amount of ink needed to paint the black strip area and the black dots area multiplied by two.

In addition to reducing the amount of printing ink, the present invention saves printing time, which is the amount of time needed to apply the extra ink.

The above illustrates how the present invention saves ink by allowing the black color of the substrate to act as the color for the middle strip and dots. When printing onto a colored substrate, one concept of the present invention is to print an underbase under some colors but not under a specific color when that color matches the substrate color.

In Adobe Photoshop^{™} and other graphics applications such as Tagged Image File Format (TIFF), Portable Network Graphics (PNG), and Portable Document Format (PDF) there is an alpha channel feature. The alpha channel controls the transparency of each pixel. Therefore, such file formats have color and transparency information for each pixel of a stored image.

The present invention uses the alpha channel information to produce the underbase required to print an image onto a colored substrate. If the transparency level of a first pixel is set to 100%, no underbase ink or image ink would be applied to the area of that pixel and the visible color would be the substrate color. If the transparency level of a second pixel is set to 0%, underbase ink and image ink would be applied to the area of that pixel, and the visible color would be the color of that pixel in the original image.

In the example of Figures 5 and 6, the transparency level of the pixels in the black strip and black dots area was set to 100%. Therefore, no substrate ink and no black ink was applied to any pixels in the black strip or black dots area. If the substrate used were a red substrate matching the red color of the top strip 101, then the transparency of the pixels in the red strip area (excluding the dots area) would have been set to 100%, allowing the red color of the red substrate to show through providing the required color for that area. Therefore, the present invention uses alpha channel information in combination with substrate color information to produce the underbase.

The example of Figures 5 and 6 is simplistic and merely used to explain the basic concept of the present invention. The following will illustrate how the color of the substrate could be utilized further to save even more printing ink.

So far, only the two extreme transparency levels have been discussed-0 and 100-wherein the color of the substrate is either fully veiled (covered) or fully exposed. Figures 7 to 9 will illustrate how the present invention uses the intermediate transparency levels to save printing ink.

Figure 7 shows a flag 700, which is similar to the flag 100 used in the description above, but instead of using the same shade of red, it uses a darker shade of red. Hence, the flag 700 consists of a top dark red strip 701 having three black dots 702 uniformly spaced from one another, a middle black strip 703, and a bottom white strip 704. (The dark red color is shown in the figures with medium-high density hatching since the figures only use different densities of hatching.)

As in the previous example, the present invention uses the graphics file that contains the alpha channel and the graphics image to produce an underbase. In this situation, the result is an underbase with an intermediate transparency level (40%, for example) for the part of the underbase that is to be used for the dark red area 701, to allow the color of the substrate in that area to partially show through (bleed) thereby creating the effect of the desired color, which is dark red. Hence, the color in the dark red area 701 would be a blend of the substrate color and pixel color. This in essence provides for a third pixel with a transparency level between 1 and 99%.

Figure 8 shows the two sections of the underbase (802,803) that would be produced by the method of the present invention to print the flag 700 on a black substrate 801. The section of the underbase in the white strip region 803 would be fully applied to the substrate 801 completely covering the substrate 801, and the section of the underbase in the dark red region 802 would be partially applied to the substrate 801 to allow some of the dark color of the substrate 801 to be used (to bleed through it) to darken the color printed upon it. Accordingly, the color of the underbase in the top section 802 would be darker than the color of the underbase in the bottom section 803. By using a white underbase that has small holes in it (unpainted pixels), the present invention saves underbase printing ink.

Figure 9 shows the image that would be printed on top of the underbase shown in Figure 8. The black regions are fully transparent to reveal the color of the substrate 801, and the white strip region is also fully transparent to reveal the color of the white underbase 803.

In this example, the present invention used alpha channel information in combination with substrate color information to produce an underbase that (1) allowed the black substrate to provide the black color within the printed image-the black strip 703 and black dots 702-and (2), allowed the black substrate to bleed through and be included as part of the dark red color in the dark red strip area 701.

In general, the present invention uses alpha channel information in combination with substrate color information to calculate the transparency level that needs to be applied to each pixel so that the color of the substrate can be used to reproduce the initial color of the image.

Generally, the method of the present invention is implemented using a general-purpose computing device. The computing device drives and associated computer-readable media provide nonvolatile storage of computer-readable instructions, data structures, program modules and other data as described herein. The computer-readable medium bears the representations of instructions and data used for causing the computer to perform the method of the present invention.

## Claims

1. A method of printing an electronic image comprising a plurality of pixels onto a substrate using a computer-assisted image processing system, said method being **characterized in that** it comprises the step of using alpha channel information in combination with substrate color information to calculate the transparency level that needs to be applied to each pixel, wherein the transparency level ranges from 0 to 100 percent, and wherein the transparency level of a first pixel is set to 100 percent, and the color of the substrate (501,801) is used as the color of said first pixel.

2. The method of claim 1, wherein the transparency level of a second pixel is set to 0 percent, and the color of a pixel in said electronic image corresponding to said second pixel is used as the color of said second pixel.

3. The method of claim 1 or 2 wherein the transparency level of a third pixel is set to a percentage between 1 percent and 99 percent, and the color of the substrate, in combination with the color of a pixel in said electronic image corresponding to said third pixel, is used as the color of said third pixel.

4. The method of any one of claims 1 to 3, wherein the substrate is non-white.

5. The method of claim 4, wherein the substrate is black in color.

6. The method of claim 4, wherein the substrate is translucent.

7. The method of claim 4, wherein the substrate is transparent.

8. The method of any one of claims 1 to 3, wherein the substrate is white in color.

9. The method of any one of claims 1 to 8, wherein said calculated transparency level that needs to be applied to each pixel is used to produce an underbase, on which the electronic image is to be printed.

10. A computer system comprising a computer and a computer-assisted image processing system, said computer system used for printing an electronic image comprising a plurality of pixels using the method of any one of claims 1 to 9.

## Patentansprüche

1. Verfahren zum Drucken eines eine Vielzahl von Pixeln umfassenden elektronischen Bildes auf ein Substrat unter Verwendung eines computergestützten Bildverarbeitungssystems, **dadurch gekennzeichnet, daß** das Verfahren zum Drucken den Schritt des Verwendens von Alphakanalinformationen in Verbindung mit Substratfarbinformationen umfaßt, um das Transparenzniveau zu berechnen, das auf jedes Pixel angewandt werden muß, wobei das Transparenzniveau von 0 Prozent bis 100 Prozent reicht, und wobei das Transparenzniveau eines ersten Pixels auf 100 Prozent gesetzt wird und die Farbe des Substrates (501, 801) als Farbe des besagten ersten Pixels verwendet wird.

2. Verfahren nach Anspruch 1, wobei das Transparenzniveau eines zweiten Pixels auf 0 Prozent gesetzt wird und die Farbe eines Pixels in dem elektronischen Bild, das dem besagten zweiten Pixel entspricht, als Farbe des zweiten Pixels verwendet wird.

3. Verfahren nach Ansprüche 1 oder 2, wobei das Transparenzniveau eines dritten Pixels auf einen Prozentsatz zwischen 1 Prozent und 99 Prozent gesetzt wird und die Farbe des Substrates zusammen mit der Farbe eines Pixels in dem elektronischen Bild, das dem besagten dritten Pixel entspricht, als Farbe des dritten Pixels verwendet wird.

4. Verfahren nach einem der Ansprüche 1 bis 3, wobei das Substrat nicht weiß ist.

5. Verfahren nach Anspruch 4, wobei die Farbe des Substrates schwarz ist.

6. Verfahren nach Anspruch 4, wobei das Substrat transluzent ist.

7. Verfahren nach Anspruch 4, wobei das Substrat transparent ist.

8. Verfahren nach einem der Ansprüche 1 bis 3, wobei die Farbe des Substrates weiß ist.

9. Verfahren nach einem der Ansprüche 1 bis 8, wobei das berechnete besagte Transparenzniveau, das auf jedes Pixel angewandt werden muß, zum Erstellen eines Vordrucks, auf dem das elektronische Bild gedruckt werden soll, verwendet wird.

10. Computersystem umfassend einen Computer und ein computergestütztes Bildverarbeitungssystem, wobei das Computersystem zum Drucken eines eine Vielzahl von Pixeln umfassenden elektronischen Bildes unter Verwendung des Verfahrens nach einem beliebigen der Ansprüche 1 bis 9 verwendet wird.

## Revendications

1. Procédé d'impression d'une image électronique comprenant une pluralité de pixels sur un substrat en utilisant un système de traitement d'image assisté par ordinateur, ledit procédé d'impression se **caractérisant en ce qu**'il comprend l'étape d'utilisation de l'information de canal alpha en combinaison avec l'information de couleur de substrat pour calculer le niveau de transparence qui doit être appliqué à chaque pixel, le niveau de transparence allant de 0 pour cent à 100 pour cent, en ce que le niveau de transparence d'un premier pixel est fixé à 100 pour cent, et en ce que la couleur du substrat (501, 801) est utilisée comme couleur dudit premier pixel.

2. Procédé selon la revendication 1, dans lequel le niveau de transparence d'un deuxième pixel est fixé à 0 pour cent, et en ce que la couleur d'un pixel de ladite image électronique correspondant audit deuxième pixel est utilisée comme couleur dudit deuxième pixel.

3. Procédé selon la revendication 1 ou 2, dans lequel le niveau de transparence d'un troisième pixel est fixé à un pourcentage entre 1 pour cent et 99 pour cent, et dans lequel la couleur du substrat, en combinaison avec la couleur d'un pixel de ladite image électronique correspondant audit troisième pixel, est utilisée comme couleur dudit troisième pixel.

4. Procédé selon l'une quelconque des revendications 1 à 3, dans lequel le substrat n'est pas blanc.

5. Procédé selon la revendication 4, dans lequel le substrat est de couleur noire.

6. Procédé selon la revendication 4, dans lequel le substrat est translucide.

7. Procédé selon la revendication 4, dans lequel le substrat est transparent.

8. Procédé selon l'une quelconque des revendications 1 à 3, dans lequel le substrat est de couleur blanche.

9. Procédé selon l'une quelconque des revendications 1 à 8, dans lequel ledit niveau de transparence calculé qui doit être appliqué à chaque pixel est utilisé pour produire une sous-couche, sur laquelle l'image électronique doit être imprimée.

10. Système informatique comprenant un ordinateur et un système de traitement d'image assisté par ordinateur, ledit système informatique étant utilisé pour imprimer une image électronique comprenant une pluralité de pixels en utilisant le procédé selon l'une quelconque des revendications 1 à 9.
